# EUROPEAN PATENT APPLICATION

(11) **EP 1 990 540 A1**
(43) Date of publication of application: **12.11.2008**
(21) Application number: 07710887.6
(22) Date of filing: 09.02.2007
(51) Int. Cl.: F03D 7/06

(54) **A VANE ATTACK ANGLE REGULATOR OF A VERTICAL SHAFT WIND-DRIVEN GENERATOR**

(30) Priority: 15.02.2006 CN 200610023892
(71) Applicant: Yan, Qiang, Pu Tuo District, Shanghai 200333 (CN)
(72) Inventor: Yan, Qiang, Pu Tuo District, Shanghai 200333 (CN)
(74) Representative: Korga, Leokadia
(86) International application number: PCT/CN2007/000458
(87) International publication number: WO 2007/093118

(57) **Abstract**

A vane attack angle regulator of a vertical shaft wind-driven generator includes a vertical rotation shaft (1), a rotating cantilever support wing fixed on the rotation shaft and vanes (13) attached to the support wing; one wind wheel is comprised of the vanes. At least one cam (6) is set in the rotation shaft direction, and the axis of the cam is parallel to the axis of the rotation shaft. Attack angles along the contour line of the cam are equal to the difference between the azimuth and the rotating angle in all points. Each vane (13) can rotate relative to the support wing, and a driving unit connects the cam with the vanes.

## Description

### FIELD OF THE INVENTION

This invention relates to vertical axis wind turbine and in particular, refers to an angle-of-attack adjusting device for blades which can effectively lower the starting wind speed of vertical axis wind turbine and increase its wind energy utilization ratio by adjusting the angle of attack of blades.

### BACKGROUND OF THE INVENTION

In order to make better use of wind energy, it has been for a long time that people designed various wind generating devices of different structure forms. Depending on the different directions of rotating axis, wind turbines are divided into the horizontal axis wind turbine (HAWT) and the vertical axis wind turbine (VAWT).

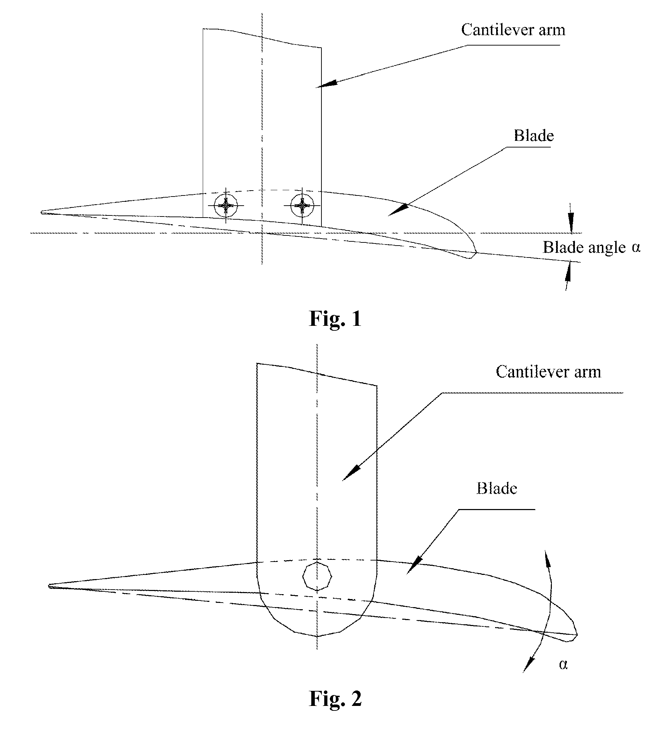

Generally speaking, the wind rotor of vertical axis wind turbine is composed of wing-shaped straight blades. The axial line of blade is parallel to vertical axis. The wing shape of blades can designed according to the principles of current aerodynamics. According to the principles of aerodynamics, the connecting line between the front and rear edges of blades is called chord line and the rotating angle between blade's chord line and the tangent of a position in the circumference is set as rotating angle α. Normally, these blades are fixed on the cantilever support wing (cantilever support) or ring-type support rotating around vertical axis and cannot rotate relative to cantilever support wing. That is to say, blade rotating angle α is fixed and unchanged, as shown in Figure 1. When the enough strong wind blows these straight blades that are wing-shaped and form a specific angle with the tangent of rotating axis, moment of rotation around vertical axis is produced on these blades to rotate the whole wind rotor.

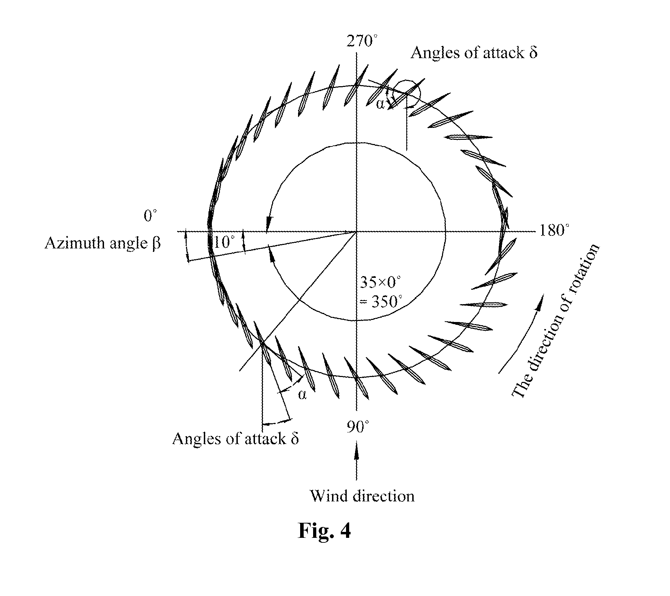

According to the principles of aerodynamics, the rotating angle between the chord line formed by connecting the centers of blades' front and rear edges and the wind direction is called angle of attack δ, as shown in Figure 4. During rotation, because the position of each blade in the circumference changes continuously, blade's angle of attack changes accordingly. When a blade is at different positions during rotation, the size and direction of the driving moment produced by the blade continually changes due to changes in blade's angle of attack, i.e. produced moment of rotation is different. At some positions, a bigger driving moment is produced; at some positions, a smaller driving moment is produced; at some positions, a big or small moment of resistance is produced. For existing technology, when a blade is at different positions during rotation, the blade rotating angle α is fixed and unchanged, while the size and direction of the driving moment produced by the blade constantly change. Therefore, it is unavoidable that currently, blades are fixed on the wind rotor of cantilever support wing. This is the important factor affecting the wind energy utilization efficiency of vertical axis wind turbine.

### SUMMARY OF THE INVENTION

By taking the deficiency of the above existing technology into consideration, this invention overcomes the design defects of existing vertical axis wind turbine and puts forth an angle-of-attack adjusting device for blades which can effectively lower the starting wind speed of vertical axis wind turbine and increase its wind energy utilization ratio by adjusting the angle of attack of blades.

According to the principles of aerodynamics, as shown in Figure 4, the connecting line between blade's front and rear edges is called chord line and the rotating angle between blade's chord line and the tangent of a position in the circumference is set as rotating angle α. When blade's chord line is parallel to the tangent, rotating angle α is zero degree; when a blade rotates clockwise around its centre of gyration, rotating angle α is set as positive; when a blade rotates anti-clockwise around its centre of gyration, rotating angle α is set as negative. The rotating angle between chord line and wind direction is called angle of attack δ. As shown in Figure 4, the azimuth angle of a wing-shaped blade at any relative position in the circumference is set as β, i.e. the range of β is 0-360 degrees. According to the principles of aerodynamics, in order for the blade to produce a driving moment, there must be one best angle of attack between the blade and wind direction, at which the blade can produce the maximum driving moment. This best angle of attack can be achieved through wind tunnel test. Therefore, when a blade rotates around the vertical axis, its angle of attack δ is always the best by adjusting its rotating angle α at different azimuth angle β in the circumference, thus maximally increasing the wind energy utilization ratio of vertical axis wind turbine.

The specific technical scheme of this invention is described below:

One angle-of-attack adjusting device for the blades of vertical axis wind turbine, including vertical rotating axis, rotatable cantilever support wing fixed on rotating axis and wind rotor consisting of a plurality of blades mounted on cantilever support wing. It has the following characteristics:

At least one cam is set up along the axial direction of the said rotating axis. The axial direction of cam is parallel to rotating axis. For any point in the contour line of this cam, angle of attack δ = azimuth angle β - rotating angle α;

Each blade can rotate relative to connected cantilever support wing;

Connect driving device to cam and blades.

In order for each blade to get driving moment at each position of circumference, the contour curve of cam is set according to the principles of aerodynamics and on the basis of angle of attack δ = azimuth angle β - rotating angle α for any point in the contour line of cam. That is to say, the contour line of cam is designed on the basis of different angle of attack δ for different azimuth angle β.

The relations among azimuth angle β, rotating angle α and angle of attack δ are shown below:

| Azimuth angle β | **10°** | **20°** | **30°** | **40°** | **50°** | **60°** | **70°** | **80°** | **90°** |
|---|---|---|---|---|---|---|---|---|---|
| Angle of attack δ | 20°∼0° | 20°∼0° | 30°∼0° | 40°∼10° | 40°∼10° | 50°∼20° | 60°∼30° | 60°∼30° | 30°∼10° |
| Blade rotating angle α | -10°∼10° | 0°∼20° | 0°∼30° | 0°∼30° | 10°∼40° | 10°∼40° | 10°∼40° | 20°∼50° | 60°∼80° |
| Azimuth angle β | **100°** | **110°** | **120°** | **130°** | **140°** | **150°** | **160°** | **170°** | **180°** |

| Angle of attack δ | 60°∼30° | 80°∼50° | 100°∼70° | 110°∼80° | 120°∼ 100° | 140°∼ 120° | 150°∼ 130° | 160°∼ 140° | 190°∼ 170° |
|---|---|---|---|---|---|---|---|---|---|
| Blade rotating angle α | 40°∼70° | 30°∼60° | 20°∼50° | 20°∼50° | 20°∼40° | 10°∼30° | 10°∼30° | 10°∼30° | -10°∼10° |

| Azimuth angle β | **190°** | **200°** | **210°** | **220°** | **230°** | **240°** | **250°** | **260°** | **270°** |
|---|---|---|---|---|---|---|---|---|---|
| Angle of attack δ | 190°∼ 220° | 200°∼ 230° | 220°∼ 240° | 240°∼ 260° | 250°∼ 270° | 270°∼ 290° | 280°∼ 300° | 280°∼ 300° | 290°- 310° |
| Blade rotating angle α | 0°∼ -30° | 0°∼ -30° | -10°∼- 30° | -20°∼- 40° | -20°∼- 40° | -30°∼- 50° | -30°∼- 50° | -20°∼- 40° | -20°-- 40° |

| Azimuth angle β | **280°** | **290°** | **300°** | **310°** | **320°** | **330°** | **340°** | **350°** | **360°** |
|---|---|---|---|---|---|---|---|---|---|
| Angle of attack δ | 300°∼ 320° | 300°∼ 320° | 310°∼ 330° | 320°∼ 340° | 320°∼ 350° | 330°∼ 350° | 340°∼ 360° | 360°∼ 350° | 370°∼ 360° |
| Blade rotating angle α | -20°∼- 40° | -10°∼- 30° | -10°∼- 30° | -10°∼- 30° | 0°∼30° | 0°∼20° | 0°∼20° | -10°∼0° | -10°∼0° |

The rotating axis of each blade can rotate horizontally relative to connected cantilever support wing;

The best range of blade rotating angle α is ±60 degrees.

In order for the blade to reduce energy consumption during rotation, the center of blade's rotating axis can be set at the center of chord line.

The central axis of the cam can coincide with rotating axis and the cam is outside rotating axis.

The central axis of the cam can coincide with rotating axis and the cam is inside rotating axis.

Groove can be made along the circumference for the cam.

Driving device includes guide bar mechanism and slider mechanism.

Driving device includes guide bar mechanism and slider mechanism. Guide bar and crank can be connected through connecting bar.

The rotating axis of each blade is fixed on the crank and connected with cantilever support wing. Bearing is mounted on wind rotor's cantilever support wing. The guide bar of the cam mechanism can reciprocate along cam's contour curve together with the bearing. Thus, the slider mechanism connected to guide bar always maintains the set angle of attack range when blades rotate together with cantilever support wing.

The bearing can be linear bearing.

The bearing can be spherical bearing.

The cam is a grooved cam. The shape of groove is that of cam's contour line.

The guide bar of cam mechanism can reciprocate along cam's contour curve together with the bearing. Through the connecting bar connected to guide bar, the slider mechanism connected to connecting bar always maintains the set angle of attack range when blades rotate together with cantilever support wing.

A reasonable angle is set between blade's chord line and crank's rotating angle in order to avoid the collinearity of blade's chord line and crank.

Driving device includes gear and gear rack. Gear and gear rack are connected to cam and blade. Together with gear and gear rack, grooved cam mechanism is used to adjust blade's angle of attack. The optimized range of angle of attack δ is the set range for grooved cam mechanism to work with slider mechanism.

Under the enough strong wind, the guide bar of grooved cam mechanism rotates with cantilever support wing. The roller at one end of guide bar moves along static cam contour line, thus causing guide bar to reciprocate. The other end of guide bar is fixed with slider mechanism. In fact, guide bar is the slider of slider mechanism. Because blade is connected to crank, guide bar's motion drives the crank to rotate, realizing the rotation of the blade relative to the support. Therefore, blade's angle of attack can be within the set ranges when the blade is at different positions on the circumference. When wind direction changes, the motor drives grooved cam to rotate by a corresponding angle, making the relative orientation between wind direction and grooved cam keep unchanged. Thus, when wind direction changes, blade's angle of attack still can be within the set ranges.

The device for this invention can be used to adjust blade's angle of attack, so the blade can rotate in a controlled way relative to cantilever support wing. As shown in Figure 2, rotating angle α can be adjusted, so blade's angle of attack δ relative to wind direction can always be within the set range. In this way, when a blade is at any position on the circumference, i.e. an azimuth angle β of 0-360 degrees, no moment of resistance, but moment of rotation, is produced, thus increasing the wind energy utilization ratio of vertical axis wind turbine.

When wind speed is higher than the said set value, grooved cam can be rotated to change angle of attack δ in order to ensure that the wind rotor outputs power at a constant rotation speed.

When wind direction does not change, the device for this invention automatically adjusts the rotating angle α between the blade and chord line depending on the different positions of the blade during wind rotor's rotation, i.e. the angle of attack δ between the blade and wind direction is adjusted to the optimized range; when wind direction changes, wind rotor (i.e. cam's azimuth angle β) is adjusted accordingly, so the direction of the device for this invention relative to wind direction keeps unchanged and blade's angle of attack can still be within the optimized range.

Compared with the wind turbine adopting existing technology (i.e. each blade has a fixed rotating angle), the device for this invention can guarantee that blades' angles of attack for different positions on the circumference are within the optimized ranges, so blades can produce a driving moment at different positions, thus increasing wind energy utilization ratio.

In static state, under the same blade conditions, the torque of the wind rotor with a variable angle of attack is 2.4-5.4 times that of the wind rotor with a fixed angle of attack, so the starting wind speed of vertical axis wind turbine can be effectively lowered.

When the wind rotor rotates, the result of test and calculation shows that under the same blade conditions, the wind energy utilization ratio of vertical axis for variable angle of attack is 1.14-3.1 times that for fixed angle of attack.

During working, the blade angle-of-attack adjusting device for this invention does not require any extra energy consumption except for some energy consumption required to adjust wind rotor's position by starting motor to adapt to wind direction change.

This invention will be described below on the basis of attached drawings and method of implementation.

### BRIEF DISCRIPTION OF THE DRAWINGS

FIG. 1 is the schematic diagram of fixing and mounting of blades in existing technology;

FiG.2 is the schematic diagram of fixing and mounting of blades in this invention device;

FIG. 3 is the sectional diagram of the implementation example 1 of this invention;

FIG. 4 is the schematic diagram of azimuth angle, blade rotating angle and angle of attack for this invention;

FIG. 5 is the rotation diagram of the wind rotor for this invention;

FIG 6 is the rotation diagram of the wind rotor for this invention;

FIG 7 is the structural diagram of the crank slider for the implementation example 1 of this invention;

FIG. 8 is the structural diagram of the gear and gear rack for the implementation example 2 of this invention; and

FIG.9 is the structural diagram of the cam for this invention.

### DETAILED DESCRIPTION OF THE INVENTION

The following implementation examples give a further detailed description of this invention, but are not a limitation of this invention.

Implementation Example 1:

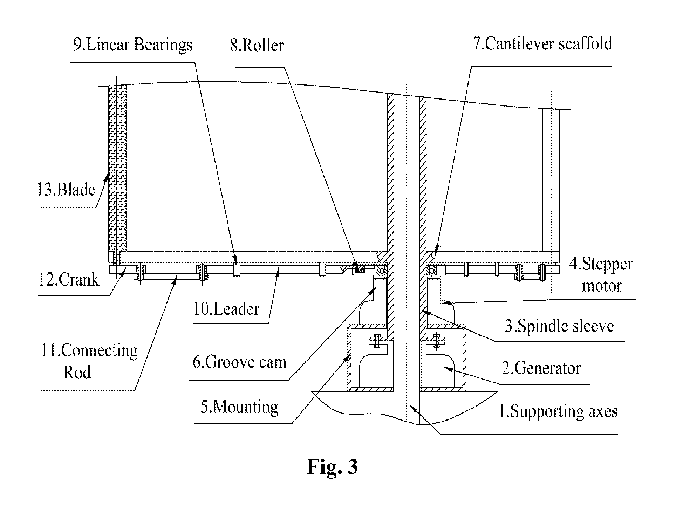

As shown in Figure 3, the wind rotor of vertical axis wind turbine 2 is supported through support frame 5. Support axis 1 is inside the vertical axis wind turbine 2. There is spindle sleeve 3 outside support axis 1. There are also wind indicator, step motor 4 and control device for step motor. Wind indicator is used to inspect the change of wind direction and provides wind direction signal to the control device for step motor. Because the wind indicator of this device and control device for step motor are one part of the control device for wind turbine, they are not shown in the figure. Step motor 4 adopts hollow step motor for direct adjustment. Motor's rotors are hollow so that wind rotor's spindle sleeve 3 passes through. Step motor 4 is fixed on the fixed support below step motor. The flange on its rotors is connected to grooved cam 6, so it can drive grooved cam to rotate.

In this implementation example, the blade angle-of-attack adjusting device includes wind rotor consisting of a plurality of blades 13, grooved cam 6, guide bar mechanism and slider mechanism. Linear bearing 9 is mounted on wind rotor's cantilever support 7. The linear bearing roller 8 at one end of the guide bar 10 of grooved cam mechanism can roll in the contour line groove of grooved cam 6. Guide bar 10 and crank 12 are connected through connecting bar 11. Blade's rotating axis is fixed on crank 12 and connected to cantilever support 7. The slider of slider mechanism is in fact the guide bar 10 of guide bar mechanism of grooved cam 6. Guide bar reciprocates under the action of the contour curve of grooved cam 6, i.e. convert into the set rotating angle of crank 12. Thus, blade 13 rotates relative to cantilever support 7, making blade's angle of attack maintain the set value.

In this device, each blade can rotate relative to connected cantilever support. On cantilever support, each blade can rotate around rotating axis. When the blade rotates to different positions, blade's angle of attack δ can be automatically adjusted to make blade's angle of attack δ for any position on the circumference always within the set angle range, as shown below:

| Azimuth angle β | **10°** | **20°** | **30°** | **40°** | **50°** | **60°** | **70°** | **80°** | **90°** |
|---|---|---|---|---|---|---|---|---|---|
| Angle of attack δ | 20°∼0° | 20°∼0° | 30°∼0° | 40°∼10° | 40°∼10° | 50°∼20° | 60°∼30° | 60°∼∼30° | 30°∼∼10° |
| Blade rotating angle α | -10'∼10° | 0°∼20° | 0°∼30° | 0°∼30° | 10°∼40° | 10°∼40° | 10°∼40° | 20°∼50° | 60°∼∼80° |

| Azimuth angle β | **100°** | **110°** | **120°** | **130°** | **140°** | **150°** | **160°** | **170°** | **180°** |
|---|---|---|---|---|---|---|---|---|---|
| Angle of attack δ | 60°∼30° | 80°∼50° | 100°∼ 70° | 110°∼ 80° | 120°∼ 100° | 140°∼ 120° | 150°∼ 130° | 160°∼ 140° | 190°∼ 170° |
| Blade rotating angle α | 40°∼70° | 30°∼60° | 20°∼50° | 20°∼50° | 20°∼40° | 10°∼30° | 10°∼30° | 10°∼30° | -10°∼10° |

| Azimuth angle β | **190°** | **200°** | **210°** | **220°** | **230°** | **240°** | **250°** | **260°** | **270°** |
|---|---|---|---|---|---|---|---|---|---|
| Angle of attack δ | 190°∼ 220° | 200°∼ 230° | 220°∼ 240° | 240°∼ 260° | 250°∼ 270° | 270°∼ 290° | 280°∼ 300° | 280°∼ 300° | 290°∼ 310° |
| Blade rotating angle α | 0°∼ -30° | 0°∼ -30° | -10°∼ -30° | -20°∼ -40° | -20°∼ -40° | -30°∼ -50° | -30°∼ -50° | -20°∼ -40° | -20°∼ -40° |

| Azimuth angle β | **280°** | **290°** | **300°** | **310°** | **320°** | **330°** | **340°** | **350°** | **360°** |
|---|---|---|---|---|---|---|---|---|---|
| Angle of attack δ | 300°∼ 320° | 300°∼ 320° | 310°∼ 330° | 320°∼ 340° | 320°∼ 350° | 330°∼ 350° | 340°∼ 360° | 360°∼ 350° | 370°∼ 360° |
| Blade rotating angle α | -20°∼ -40° | -10°∼ -30° | -10°∼ -30° | -10°∼ -30° | 0°∼ -30° | 0°∼ -20° | 0°∼ -20° | -10°∼ 0° | -10°∼ 0° |

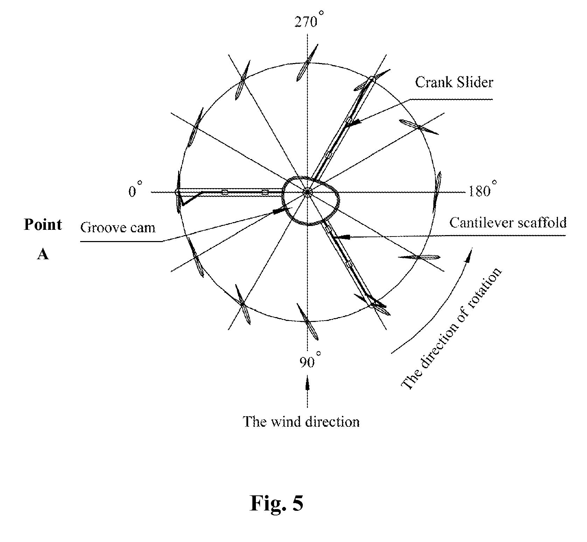

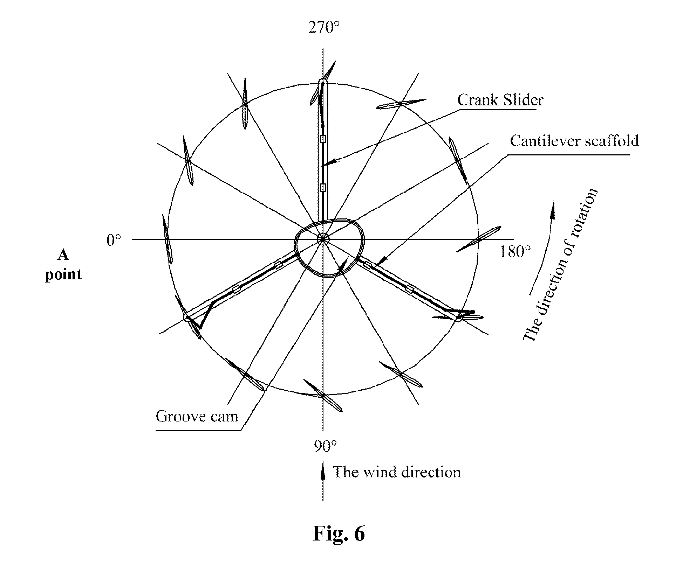

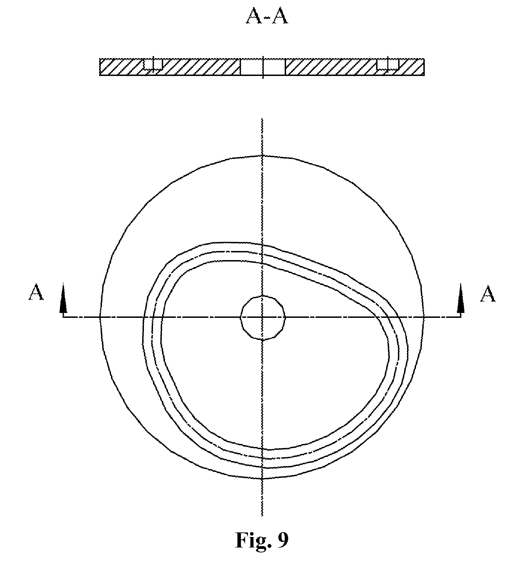

The adjustment of angle of attack when a blade is at different positions on the circumference is the core of this invention. Grooved cam mechanism, as shown in Figure 9, is used to adjust the angle of attack of blades. Grooved cam mechanism is composed of grooved cam and guide bar 10. As shown in Figure 5 and Figure 6, the cam of grooved cam mechanism is a planar grooved cam. The shape of groove is that of cam's contour line. According to the principles of aerodynamics, cam's contour line is set on the basis of angle of attack δ = azimuth angle β - rotating angle α for any point at cam's contour line, i.e. design cam's contour line by setting different angles of attack δ when the blade has different azimuth angles β. Grooved cam 6 is connected with the rotors of step motor 4. When wind direction does not change, grooved cam 6 keeps unchanged. When wind direction has a bigger change (i.e. wind energy utilization ratio or output power of wind turbine is affected), step motor 4 adjusts the azimuth angle β of grooved cam 6. Guide bar 10 of grooved cam mechanism is mounted in the linear bearing 9 of cantilever support 7. One roller 8 is mounted at one end of guide bar 10 and the other end is connected to connecting bar 11. A shown in 3 and 7, guide bar 10 of grooved cam mechanism is in fact also the slider of slider mechanism. The roller 8 of guide bar 10 is embedded in the groove of grooved cam 6 and can move along the groove. Cam's contour curve on both sides of groove makes guide bar 10 move at the set angle.

A reasonable angle is set between blade's chord line and crank's rotating angle in order to avoid the collinearity of blade's chord line and crank. That is to say, in order to avoid the collinearity of crank 12 and connecting bar 11 as well as the dead point as may be caused by slider mechanism, a reasonable angle is set between the chord line of blade 13 and the rotating angle of crank 12. For example, 20 degrees may be set and then the rotating range of blade 13 is within ±60 degrees.

When wind rotor rotates around vertical axis under wind force, on one hand, guide bar 10 rotates around vertical axis under the driving of cantilever support 7; on the other hand, the roller 8 on guide bar 10 moves along cam's contour curve in the groove of grooved cam 4. The contour curve of grooved cam 4 decides the travel of reciprocation of guide bar in linear bearing 9. The driving force of reciprocation is produced by the squeezing of the roller 8 at one end of guide bar 10 and the contour of grooved cam when cantilever support 7 drives guide bar 10 to rotate. Because the guide bar 10 of cam mechanism is the slider of slider mechanism, its reciprocation drives crank 12 to rotate and crank 12 is connected with blade 13, the angle of attack δ when the blade is at different positions is always within the set angle range.

The control device for step motor judges according to the signal of wind indicator whether rotation is needed. When wind direction does not change, step motor 4 does not rotate. When wind direction has a bigger change (depending on the precision of wind indicator, normally 3-5 degrees), it is needed to adjust cam's azimuth angle according to the change of wind direction. Step motor drives grooved cam 6 to rotate, realizing the adjustment of direction of grooved cam and making the relative position of wind direction and grooved cam 6 keeps unchanged after change of wind direction. Then, motor stops running until wind direction changes again.

As far as the whole process is concerned, when wind direction does not change, the contour curve of grooved cam 6 can guarantee that during rotation of wind rotor, the angle of attack δ between blade 13 and wind direction is maintained within the set range. The driving force of blade rotation comes from the squeezing of the roller at one end of guide bar and the contour curve of grooved cam and no extra power is required. When wind direction changes, in order to offset this change, step motor 4 can be started to drive grooved cam 6 to rotate by a corresponding angle so that the relative direction of wind direction and grooved cam 6 always remains unchanged. Therefore, for the whole device, electric energy consumption is required only when wind direction has a bigger change, i.e. the angle between central line of grooved cam and wind direction needs to be adjusted. In other occasions, blade 13 is adjusted through contour curve of grooved cam, without needing electric energy consumption. When the change of wind direction is very small (normally less than 3-5 degrees), this device does not consume electric energy.

When wind speed is above one set value (normally 15m/s), angle of attack δ can be changed by rotating grooved cam 6 - as shown in Figure 5 and Figure 6), rotate A point in grooved cam 6 to a position where azimuth angle β is above 0 degree. The higher wind speed is, the bigger angle of rotation can be. In this way, wind rotor can maintain power output at a constant speed of rotation.

Implementation Example 2:

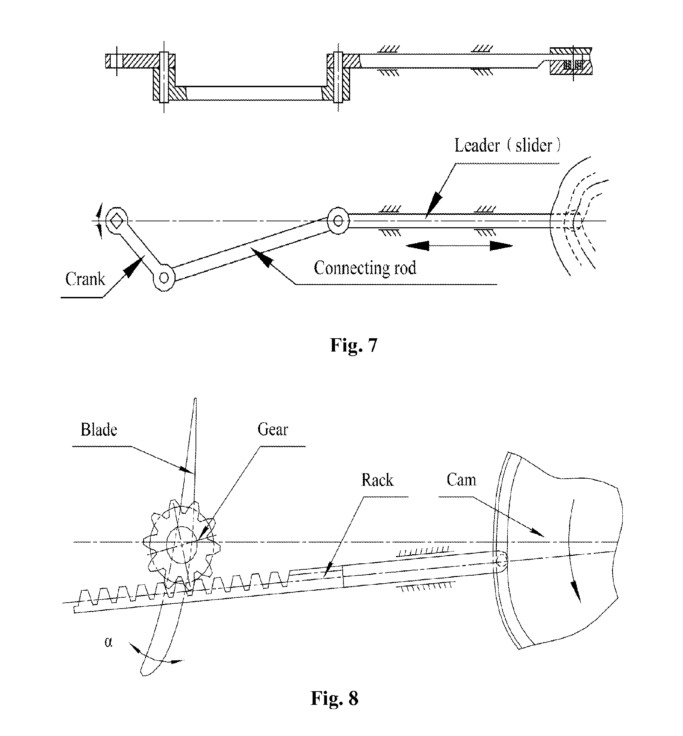

As shown in Figure 8, gear and gear rack are connected to cam and blades.

Other devices are the same as those for implementation example 1. Connecting bar mechanism and slider mechanism are replaced with gear and gear rack structure as driving device. Grooved cam mechanism realizes the adjustment of blade's angle of attack together with gear and gear rack. The optimized range of angle of attack δ is the same as the set range when grooved cam mechanism is used together with slider mechanism.

In spite of a detailed description of this invention and some implementation examples, it is evident that the skilled technicians in this field may make changes and amendments by focusing on the design idea and scope of the inventor.

## Claims

1. One angle-of-attack adjusting device for the blades of vertical axis wind turbine, including:
vertical rotating axis, rotatable cantilever support wing fixed on rotating axis and wind rotor consisting of a plurality of blades mounted on cantilever support wing;
It has the following characteristics:
at least one cam is set up along the axial direction of the said rotating axis, the axial direction of cam is parallel to rotating axis, for any point in the contour line of this cam, angle of attack δ = azimuth angle β - rotating angle α;
each blade can rotate relative to connected cantilever support wing; and
connect driving device to cam and blades.

2. The angle-of-attack adjusting device for the blades of vertical axis wind turbine of claim 1, wherein the relations among azimuth angle β, rotating angle α and angle of attack δ are shown below:
| Azimuth angle β | **10°** | **20°** | **30°** | **40°** | **50°** | **60°** | **70°** | **80°** | **90°** |
|---|---|---|---|---|---|---|---|---|---|
| Angle of attack δ | 20°∼0° | 20°∼0° | 30°∼0° | 40°∼10° | 40°∼10° | 50°∼20° | 60°∼30° | 60°∼30° | 30°∼10° |
| Blade rotating angle α | -10°∼10° | 0°∼20° | 0°∼30° | 0°∼30° | 10°∼40° | 10°∼40° | 10°∼40° | 20°∼50° | 60°∼80° |
| Azimuth angle β | **100°** | **110°** | **120°** | **130°** | **140°** | **150°** | **160°** | **170°** | **180°** |
|---|---|---|---|---|---|---|---|---|---|
| Angle of attack δ | 60°∼30° | 80°∼50° | 100°∼70° | 110°∼80° | 120°∼ 100° | 140°∼ 120° | 150°∼ 130° | 160°∼ 140° | 190°∼ 170° |
| Blade rotating angle α | 40°∼70° | 30°∼60° | 20°∼50° | 20°∼50° | 20°∼40° | 10°∼30° | 10°∼30° | 10°∼30° | -10°∼10° |
| Azimuth angle β | **190°** | **200°** | **210°** | **220°** | **230°** | **240°** | **250°** | **260°** | **270°** |
|---|---|---|---|---|---|---|---|---|---|
| Angle of attack δ | 190°∼ 220° | 200°∼ 230° | 220°∼ 240° | 240°∼ 260° | 250°∼ 270° | 270°∼ 290° | 280°∼ 300° | 280°∼ 300° | 290°∼ 310° |
| Blade rotating angle α | 0°∼ -30° | 0°∼ -30° | -10°∼ -30° | -20°∼ -40° | -20°∼ -40° | -30°∼ -50° | -30°∼ -50° | -20°∼ -40° | -20°∼ -40° |
| Azimuth angle β | **280°** | **290°** | **300°** | **310°** | **320°** | **330°** | **340°** | **350°** | **360°** |
|---|---|---|---|---|---|---|---|---|---|
| Angle of attack δ | 300°∼ 320° | 300°∼ 320° | 310°∼ 330° | 320°∼ 340° | 320°∼ 350° | 330°∼ 350° | 340°∼ 360° | 360°∼ 350° | 370°∼ 360° |
| Blade rotating angle α | -20°∼ -40° | -10°∼ -30° | -10°∼ -30° | -10°∼ -30° | 0°∼ -30° | 0°∼ -20° | 0°∼ -20° | -10°∼ 0° | -10°∼ 0° |

3. The angle-of-attack adjusting device for the blades of vertical axis wind turbine of claim 1, wherein the rotating axis of each blade can rotate horizontally relative to connected cantilever support wing.

4. The angle-of-attack adjusting device for the blades of vertical axis wind turbine of claim 1, wherein the best range of blade rotating angle α is ±60 degrees.

5. The angle-of-attack adjusting device for the blades of vertical axis wind turbine of claim 1, wherein in order for the blade to reduce energy consumption during rotation, the center of blade's rotating axis can be set at the center of chord line.

6. The angle-of-attack adjusting device for the blades of vertical axis wind turbine of claim 1, wherein the central axis of the cam can coincide with rotating axis and the cam is outside rotating axis.

7. The angle-of-attack adjusting device for the blades of vertical axis wind turbine of claim 1, wherein the central axis of the cam can coincide with rotating axis and the cam is inside rotating axis.

8. The angle-of-attack adjusting device for the blades of vertical axis wind turbine of claim 1, wherein groove can be made along the circumference for the cam.

9. The angle-of-attack adjusting device for the blades of vertical axis wind turbine of claim 1, wherein driving device includes guide bar mechanism and slider mechanism.

10. The angle-of-attack adjusting device for the blades of vertical axis wind turbine of claim 9, wherein driving device includes guide bar mechanism and slider mechanism, guide bar and crank can be connected through connecting bar.

11. The angle-of-attack adjusting device for the blades of vertical axis wind turbine of claim 9, wherein the rotating axis of each blade is fixed on the crank and connected with cantilever support wing, bearing is mounted on wind rotor's cantilever support wing, the guide bar of the cam mechanism can reciprocate along cam's contour curve together with the bearing, thus, the slider mechanism connected to guide bar always maintains the set angle of attack range when blades rotate together with cantilever support wing.

12. The angle-of-attack adjusting device for the blades of vertical axis wind turbine of claim 11, wherein the bearing can be linear bearing.

13. The angle-of-attack adjusting device for the blades of vertical axis wind turbine of claim 11, wherein the bearing can be spherical bearing.

14. The angle-of-attack adjusting device for the blades of vertical axis wind turbine of claim 8, wherein the cam is a grooved cam, the shape of groove is that of cam's contour line.

15. The angle-of-attack adjusting device for the blades of vertical axis wind turbine of claim 9, wherein the guide bar of cam mechanism can reciprocate along cam's contour curve together with the bearing, through the connecting bar connected to guide bar, the slider mechanism connected to connecting bar always maintains the set angle of attack range when blades rotate together with cantilever support wing.

16. The angle-of-attack adjusting device for the blades of vertical axis wind turbine of claim 9, wherein a reasonable angle is set between blade's chord line and crank's rotating angle in order to avoid the collinearity of blade's chord line and crank.

17. The angle-of-attack adjusting device for the blades of vertical axis wind turbine of claim 1, wherein driving device includes gear and gear rack., gear and gear rack are connected to cam and blade.

18. The angle-of-attack adjusting device for the blades of vertical axis wind turbine of claim 1, wherein when wind speed is higher than the set value, cam can be rotated to change angle of attack δ in order to ensure that the wind rotor outputs power at a constant rotation speed.

19. The angle-of-attack adjusting device for the blades of vertical axis wind turbine of claim 8 or 14, wherein when wind speed is higher than the set value, grooved cam can be rotated to change angle of attack δ in order to ensure that the wind rotor outputs power at a constant rotation speed.
